**Europäisches Patentamt**

**European Patent Office**

**Office européen des brevets**

(11) Veröffentlichungsnummer: **0 209 744**
B1

(12) **EUROPÄISCHE PATENTSCHRIFT**

(45) Veröffentlichungstag der Patentschrift:
22.02.89

(21) Anmeldenummer: 86108569.4

(22) Anmeldetag: 24.06.86

(51) Int. Cl.⁴: **B63B 1/08**, B63B 35/08

(54) Heckschürze für eisbrechende Schiffe.

(30) Priorität: 03.07.85 DE 3523763

(43) Veröffentlichungstag der Anmeldung:
28.01.87 Patentblatt 87/5

(45) Bekanntmachung des Hinweises auf die Patenterteilung:
22.02.89 Patentblatt 89/8

(84) Benannte Vertragsstaaten:
BE DE FR GB IT NL SE

(56) Entgegenhaltungen:
DE-A- 2 241 840
US-A- 4 359 010
US-A- 4 428 735

(73) Patentinhaber: **Thyssen Nordseewerke GmbH, Am Zungenkai, D-2970 Emden(DE)**

(72) Erfinder: **Varges, Günter, Dipl.-Ing., Hellsberger Strasse 50, D-2970 Emden(DE)**

(74) Vertreter: **Richter, Werdermann & Gerbaulet, Neuer Wall 10, D-2000 Hamburg 36(DE)**

ACTORUM AG

## Beschreibung

Die Erfindung betrifft eine Heck-Schürze oberhalb von Propellern und Rudern von eisbrechenden Schiffen.

Propeller und Ruder von eisbrechenden Schiffen sind – und dies insbesondere bei Rückwärtsfahrt in eisbedeckten Gewässern – durch Kontakt mit Eis einer erhöhten Beschädigungsgefahr ausgesetzt. Außerdem kann durch Eiskontakt der Propeller deren Schub- und Wirkungsgrad erheblich verringert werden und sogar – bei Düsenpropellern – gegen Null gehen, womit der gewünschte Schiffsvortrieb verringert wird oder verlorengeht.

Zur Abwendung dieser Nachteile sind aus dem Schiffsrumpf austretende Schürzen vorgeschlagen worden, die sowohl von vorne bei Vorwärtsfahrt als auch von hinten bei Rückwärtsfahrt am Schiffskörper entlang gleitendes, gebrochenes Eis von Propulsions- und Steuerorganen fernhalten sollen. Diese bekannt gewordenen Schürzenanordnungen haben jedoch den Nachteil einer erheblichen Erhöhung des Offenwasserwiderstandes der mit solchen Schürzen versehenen Schiffskörper und haben außerdem auch nur einen begrenzten Schutz gegen den unwillkommenen Eiskontakt von Propulsions- und Steuerorganen gezeigt.

Durch die US-A 4 428 735 ist ein Schutz der Propeller für Eisbrecher bekannt. Dieser Schutz besteht aus die Propeller umgebenden ringförmigen Mantelgehäusen, die in Richtung zum Vorschiff verlaufende und eisabweisende Profilkörper aufweisen, die in den Schiffskörper übergehen und aus einer heckseitig vorgesehenen, u.a. auch V-förmig ausgebildeten Abweisschürze. Mit einer derartigen Ausgestaltung wird ausschließlich einerseits ein Schutz der Propeller bei Vorwärtsfahrt des Eisbrechers erreicht, indem nämlich sich in der Fahrrinne befindende Eisschollen über die stromlinienförmig ausgebildeten Profilkörper aus dem Bereich der Propeller geleitet werden, und andererseits soll durch die Abweisschürze eine Ablenkung von Eis aus dem Schraubenbereich, insbesondere bei Rückwärtsfahrt, gefördert werden. Um aber den Propellernachstrombereich nicht ungünstig zu beeinflussen, kann die Abweisschürze nur kleinste Abmessungen aufweisen, was wiederum dazu führt, daß keine ausreichende Sicherung der Propeller und der den Propellern zugeordneten Steuerorgane, wie Ruder, gegen auftreffende Eisschollen bei einer Rückwärtsfahrt des Eisbrechers gegeben ist. Es ist daher nicht vermeidbar, daß in der Fahrrinne sich befindende Eisschollen bei Rückwärtsfahrt des Eisbrechers voll auf die Propeller auftreffen. Gegen große Eisschollen ist dagegen ein Schutz der Propeller nur insofern gegeben, als im Bereich der rückwärtigen Öffnungen der die Propeller umgebenden Ringmäntel radial verlaufende, eisabweisende Prallbleche vorgesehen sind, die jedoch zu einer Veränderung des Nachstromes der Propeller führen, so daß der Propellerwirkungsgrad herabgesetzt wird. Diese Ausgestaltung vermeidet jedoch nicht das Auftreffen von kleineren Eisschollen oder Eisstücken auf die Propellerflügel, da Eisschollen und Eisstücke durch die Zwischenräume der eisabweisenden Prallbleche in den Bereich der Propellerflügel gelangen können und insbesondere wenn es sich um Propeller mit großen Durchmessern handelt, ist es nicht möglich, im Nachstrombereich der Propeller eine große Anzahl von eisabweisenden Prallblechen vorzusehen, da dann der Wirkungsgrad der Propeller ganz wesentlich herabgesetzt wird. Den Propellern zugeordnete Steuerorgane, wie Ruder od. dgl., sind bei Rückwärtsfahrt des Eisbrechers voll den Eisschollen ausgesetzt, so daß eine Beeinträchtigung der Manövrierfähigkeit eines derartig ausgebildeten Eisbrechers bei Rückwärtsfahrt nicht ausgeschlossen ist. Ein im rückwärtigen Bereich der Propeller angeordneter Schutz ist bei dieser bekannten Eisbrecherausgestaltung nicht vorgesehen.

Die DE-A 2 241 840 beschreibt eine Heckkonstruktion für Eisbrecher mit einem Hauptdeck, einer Konstruktionswasserlinie und einem Rumpf mit einem um die Mittellängsachse symmetrisch ausgebildeten Heck, das seitliche und hintere Seitenwände aufweist, die im wesentlichen konkav ausgebildet sind, die unterhalb des Hauptdecks und oberhalb des Bodens des Schiffes enden und die so aufgebaut und angeordnet sind, daß sie sich vom Hauptdeck aus nach unten und auswärts neigen und außen am Heck in einer vorbestimmten Entfernung unterhalb der Konstruktionswasserlinie enden. Damit soll ein Eisbrecher mit einem Heckaufbau geschaffen werden, welcher es Schiffen möglich machen soll, das Eis zu brechen und beim Rückwärtsfahren im eigenen gebrochenen Kanal, welcher mit zuvor gebrochenem Eis gefüllt ist, die Eisstücke nach oben und an die Seiten des Schiffes zu pflügen, wodurch der Kanal freigemacht wird, um das Rückwärtsfahren zu erleichtern und wobei gleichzeitig das Eis von den Schiffsschrauben ferngehalten wird. Zu diesem Zweck sind die Längsschnitte und Profile des Hecks in der Nähe der Eisarbeitslinie oder der Konstruktionswasserlinie in einer genügenden Entfernung unterhalb der Wasserlinie abwärts und nach hinten geneigt, so daß diese Linie unterhalb der Höhe der schwimmenden, gebrochenen Eisstücke liegt. Durch diese Konstruktion eines Schiffes mit einem Heck soll eine Einrichtung geschaffen werden, durch welche das Heck die Eisstücke nach oben und auf die Seiten des Schiffes schaufeln kann, wenn das Schiff in einem zuvor gebrochenen Kanal rückwärtsfährt, so daß der Kanal freigehalten wird, um das Rückwärtsfahren zu erleichtern. Durch diese Heckausgestaltung soll sich auch ein Schutz der Schiffsschrauben und Ruder beim Rückwärtsfahren des Schiffes und ein zusätzlicher Schutz der Schrauben und Ruder beim Vorwärtsfahren gegen Eis, das an den Seiten des gebrochenen Kanals vorhanden sein kann, ergeben. Auch bei dieser Heckausgestaltung sind die Propulsions- und Steuerorgane bei einer Rückwärtsfahrt des Schiffes den in der Fahrrinne schwimmenden und in die Fahrrinne aufschwimmenden Eisschollen ausgesetzt. Die Propulsions- und Steuerorgane sind bei einer Rückwärtsfahrt nicht geschützt, da den Propulsions- und Steuerorganen keine zusätzlichen Einrichtungen zugeordnet sind, aufgrund der verhindert wird, daß Eisschollen auf die Propulsions- und Steuerorgane auftreffen. Das Heck dieses Schiffes ist so profiliert, daß es einerseits zu eisbrechenden Zwecken herangezogen werden kann und zum anderen in der Fahrrinne schwimmende Eisschollen seitlich ableitet. Eine Heck-Schürze, die als Volumenkörper ausgebildet und den Propulsions- und Steuerorganen nachgeordnet ist, ist bei dieser bekannten Heckausgestaltung nicht vorgesehen.

Die Erfindung löst die Aufgabe, eine Heck-Schürze für eisbrechende Schiffe zu schaffen, mit der der Schiffswiderstand und die erforderliche Antriebsleistung in offenem Wasser verringert und mit der die Propulsions- und Steuerorgane besser gegen Eiskontakt, insbesondere bei Rückwärtsfahrt durch feste Eisdecken, geschützt wird.

Zur Lösung dieser Aufgabe wird eine Heck-Schürze vorgeschlagen, die erfindungsgemäß die im Patentanspruch 1 gekennzeichneten Merkmale aufweist.

Bei einer derart ausgebildeten Heck-Schürze wirkt die Hinterkante des Heck-Schürzen-Volumenkörpers wie die Schneide einer Pflugschar und fördert die Schollen der eisbrechenden Eisdecke oder bereits gebrochene Schollen entlang der Heck-Schürzen-Oberseite an Propellern und Rudern vorbei, und zwar in den vor diesen liegenden Bereich des Hinterschiffs. In der Offenwasserfahrt verhindert dagegen der Heck-Schürzen-Volumenkörper eine Ablösung der Strömung vom Heck hinter dem Propeller und senkt dadurch die zum Vortrieb erforderliche Antriebsleistung gegenüber einem Schiff ohne Heck-Schürze. Dabei ist es besonders vorteilhaft, daß die Wasserlinien einschließlich der Eisbrechwasserlinie der Heck-Schürze zur Mittelebene des Schiffes einen Winkel von weniger als 20° bilden. Eine Beeinflussung des Propellernachstroms erfolgt in keiner Weise.

Vorteilhafte Ausgestaltungen der Erfindung sind in den Unteransprüchen gekennzeichnet.

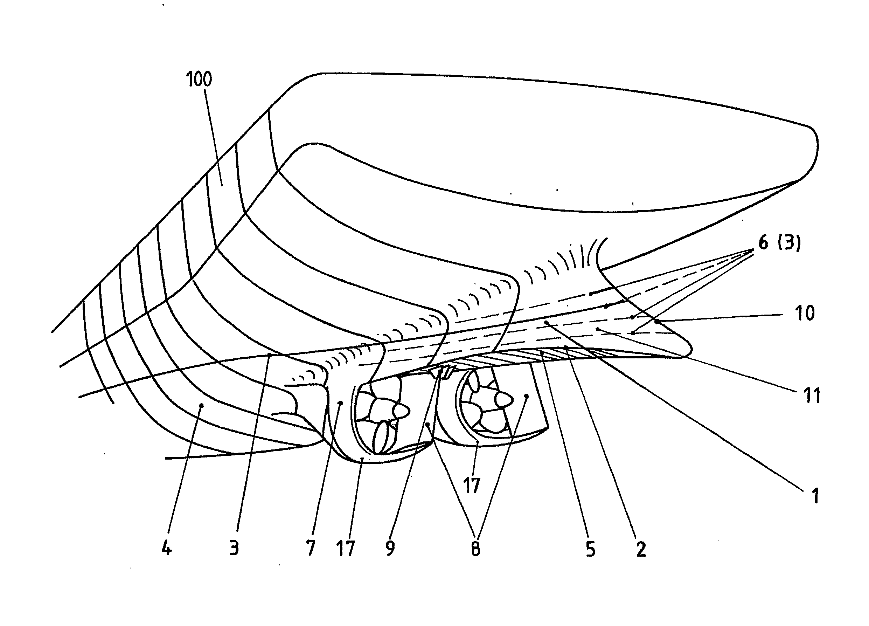

Ein Ausführungsbeispiel der Erfindung wird nachstehend anhand der Zeichnung erläutert, die ein Hinterschiff mit einem stromlinienförmigen Heck-Schürzen-Volumenkörper in einer schaubildlichen Ansicht zeigt.

Das Hinterschiff 4 eines Schiffskörpers 100 weist einen stromlinienförmigen Heck-Schürzen-Volumenkörper 1 auf, der sich stromlinienförmig in Richtung des Schiffshecks zu einem spitzen Ende pflugähnlich verjüngt. Dieser Volumenkörper 1 ist an seinen unteren Außenkanten 2 jeweils breiter als im darüberliegenden Bereich ausgebildet. Außerdem kann sich die Heck-Schürze über einen Bereich oberhalb und unterhalb der Eisbrechwasserlinie 3 erstrecken. Die Unterseite der Heck-Schürze ist mit 5 bezeichnet. Die Wasserlinien der Heck-Schürze sind bei 6 angedeutet. Mit 10 ist die Hinterkante der Heck-Schürze und mit 11 deren Oberseite bezeichnet.

Der Heck-Schürzen-Volumenkörper 1 geht zum Vorschiff hin stetig in die Schiffsform des Hinterschiffs 4 über. Die Unterseite 5 der Heck-Schürze ist in Spantebene vorzugsweise flach oder V-förmig ausgebildet; sie kann auch der Kontur der Propellerstrahlen angepaßt sein. Die Wasserlinien 6 einschließlich der Eisbrechwasserlinie 3 der Heck-Schürze können zur Mittelebene des Schiffes einen Winkel von weniger als 20° bilden. Die Heck-Schürzenunterseite 5 ist in Richtung des Schiffshecks nach unten gerichtet.

Bei eisbrechenden Schiffen mit Düsenpropellern läuft der Querschnitt der Heck-Schürze stetig in die Außenkonturen 7 der mit 17 bezeichneten außen liegenden Propellerdüsen ein.

An der Unterseite 5 der Heck-Schürze sind hinter jedem Ruder 8 mehrere, parallel zur jeweiligen Rudermittelebene aus dünnen Profilen oder Blechen bestehende Eissporne 9 nebeneinanderliegend angeordnet. Außerdem können die unteren Außenkanten 2 des Heck-Schürzen-Volumenkörpers 1 über längere Bereiche zwischen den Propellern und dem Heck scharfkantig ausgeführt sein.

Die Heck-Schürze ist hiernach als ein sich stromlinienförmig in Richtung des Schiffshecks zu einem spitzen Ende verjüngenden Volumenkörper 1 und an ihren unteren Außenkanten 2 jeweils breiter als im darüberliegenden Bereich ausgebildet, wodurch der Schiffswiderstand und die erforderliche Antriebsleistung bei Offenwasserfahrt verringert wird und insbesondere bei Rückwärtsfahrt die Propulsions- und Steuerorgane gegen Eiskontakt geschützt werden.

## Patentansprüche

1. Heck-Schürze oberhalb von Propellern und Rudern von eisbrechenden Schiffen, dadurch gekennzeichnet, daß die Heck-Schürze als ein sich stromlinienförmig in Richtung des Schiffshecks zu einem spitzen Ende pflugähnlich verjüngender Volumenkörper (1) mit einer in einer Vertikalebene liegenden Hinterkante (10) und an ihren unteren Außenkanten (2) jeweils breiter als in dem darüberliegenden eingezogenen Bereich ausgebildet ist, wobei die Wasserlinien (6) einschließlich der Eisbrechwasserlinie (3) der Heckschürze zur Mittelebene des Schiffes einen Winkel von weniger als 20° bilden und die Heck-Schürzenunterseite (5) in Richtung des Schiffshecks nach unten geneigt ist.

2. Heck-Schürze nach Anspruch 1, dadurch gekennzeichnet, daß die Heck-Schürze zum Vorschiff hin stetig in die Schiffsform des Hinterschiffs (4) übergeht.

3. Heck-Schürze nach Anspruch 1 und 2, dadurch gekennzeichnet, daß die Unterseite (5) der Heck-Schürze in einer Spantebene flach oder V-förmig ausgebildet oder der Kontur der Propellerstrahlen angepaßt ist.

4. Heck-Schürze nach Anspruch 1 bis 3 für eisbrechende Schiffe mit Düsenpropellern, dadurch gekennzeichnet, daß der Querschnitt der Heckschürze stetig in die Außenkonturen (7) außenliegender Propellerdüsen (17) einlaufend ist.

5. Heck-Schürze nach Anspruch 1 bis 4, dadurch gekennzeichnet, daß an der Unterseite (5) der Heck-Schürze hinter jedem Ruder (8) mehrere, parallel zur jeweiligen Rudermittelebene aus dünnen Profilen oder Blechen bestehende Eissporne (9) nebeneinander angeordnet sind.

6. Heck-Schürze nach Anspruch 1 bis 5, dadurch gekennzeichnet, daß die unteren Außenkanten (2) des Volumenkörpers (1) der Heck-Schürze über längere Bereiche zwischen Propeller und Heck scharfkantig ausgeführt sind.

7. Heck-Schürze nach Anspruch 1 bis 6, dadurch gekennzeichnet, daß die Heck-Schürze sich über einen Bereich oberhalb und unterhalb der Eisbrechwasserlinie (3) erstreckt.

## Claims

1. Stern cover located above the screws and rudders of ships cutting ice, characterized in that the stern cover is constructed as a bulk body (1) tapering in a streamlined fashion in the direction of the stern of the ship into a pointed end in a plough-like manner with a rear edge (10) located in a vertical plane and in that, at its lower outer edges (2), it is in each case broader than in the superjacent drawn-in area, in which the water lines (6) including the ice-cutting water line (3) of the stern cover form, relative to the centre plane of the ship, an angle of less than 20° and the underside (5) of the stern cover is inclined downwardly in the direction of the stern of the ship.

2. Stern cover according to Claim 1, characterized in that the stern cover, in the direction towards the forecastle, passes continuously into the ship's shape of the after-body (4).

3. Stern cover according to Claim 1, characterized in that the underside (5) of the stern cover, in a frame plane, is constructed to be flat or V-shaped or is adapted to the outline of the slipstream.

4. Stern cover according to Claims 1 to 3 for ships cutting ice and equipped with jet propellers, characterized in that the cross section of the stern cover runs continuously into the outer contours (7) of externally located propeller jets (17).

5. Stern cover according to Claims 1 to 4, characterized in that, on the underside (5) of the stern cover, behind each rudder (8), parallel to the respective rudder plane, several ice spades (9) consisting of thin sections or plates are disposed side by side.

6. Stern cover according to Claims 1 to 5, characterized in that the lower outer edges (2) of the bulk body (1) of the stern cover are constructed sharp-edged over relatively long areas between propellers and stern.

7. Stern cover according to Claims 1 to 6, characterized in that the stern cover extends across an area above and below the ice-cutting water line (3).

## Revendications

1. Ecran protecteur pour la poupe des brise-glaces au-dessus des hélices et gouvernails, caractérisé en ce que l'écran protecteur pour la poupe est formé comme un corps volumique (1) qui s'effile à la façon d'une charrue en une extrémité pointue de manière fuselée en direction de la poupe du navire, avec un bord arrière (10) se situant dans le plan vertical et qu'il est respectivement plus large à ses bords extérieurs inférieurs (2) que dans la zone rentrée susjacente, les lignes de flottaison (6) y compris la ligne de flottaison brise-glace (3) de l'écran protecteur pour la poupe formant un angle inférieur à 20° vers le plan médian du navire et la face inférieure (5) de l'écran protecteur pour la poupe étant inclinée vers le bas en direction de la poupe du navire.

2. Ecran protecteur pour la poupe selon la revendication 1, caractérisé en ce que l'écran protecteur pour la poupe se convertit vers l'avant en continu en plan de construction de la poupe (4).

3. Ecran protecteur pour la poupe selon les revendications 1 et 2, caractérisé en ce que la face inférieure (5) de l'écran protecteur pour la poupe est formée de façon plane ou en forme de V dans le plan de couple du navire ou qu'elle est adaptée aux contours des jets des hélices.

4. Ecran protecteur pour la poupe selon les revendications 1 à 3, pour des brise-glaces avec hélices à tuyères Kort, caractérisé en ce que la section de l'écran protecteur pour la poupe se rétrécit en continu dans les contours extérieurs (7) des tuyères Kort (17) que se trouvent à l'extérieur.

5. Ecran protecteur pour la poupe selon les revendications 1 à 4, caractérisé en ce que plusieurs crampons (9) constitués par des profilés ou des tôles minces sont placés l'un à côté de l'autre sur la face inférieure (5) de l'écran protecteur pour la poupe derrière chaque gouvernail (8), parallèlement au plan médian du gouvernail respectif.

6. Ecran protecteur pour la poupe selon les revendications 1 à 5, caractérisé en ce que les bords extérieurs inférieurs (2) du corps volumique (1) de l'écran protecteur pour la poupe sont réalisés avec des arrêtes vives sur des zones assez longues entre l'hélice et la poupe.

7. Ecran protecteur pour la poupe selon les revendications 1 à 6, caractérisé en ce que l'écran protecteur pour la poupe s'étend sur une zone au-dessus et au-dessous de la ligne de flottaison brise-glace (3).